# EUROPEAN PATENT APPLICATION

(11) **EP 4 498 637 A1**
(43) Date of publication of application: **29.01.2025**
(21) Application number: 23188211.9
(22) Date of filing: 27.07.2023
(51) Int. Cl.: H04L 9/40

(54) **INTRUSION PREVENTION SYSTEM FOR 5G CORE**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer-implemented method for detecting control plane intrusions in a communications network, comprising: accessing a list of pre-defined traffic signatures, each traffic signature representing a non-malicious control plane network traffic pattern; monitoring network traffic within the control plane; comparing the monitored network traffic to the list of pre-defined traffic signatures to determine whether the monitored network traffic matches any signatures in the list of pre-defined traffic signatures; responsive to determining that the monitored network traffic does not match any signatures in the list of pre-defined traffic signatures, classifying the monitored network traffic as a potential security risk.

## Description

### Technical Field

Embodiments of the present invention described herein relate to methods and systems for preventing 5G network intrusion.

### Background

5G is the fifth-generation mobile network which enables a new kind of network that is designed to connect almost everyone and everything together. One concept introduced by 5G is segregating the control plane from the data plane. The 5G network uses the components in the control plane to establish a Protocol Data Unit (PDU) session to allow peers to communicate. The network functions of the 5G control plane (5G core) are software-based implementation which typically reside in virtual machines (VMs) or software containers. Therefore, the 5G core inherits the security issues of the VMs and the software containers.

### Summary of the Disclosure

The present invention accordingly provides, in a first aspect, a computer implemented method for detecting control plane intrusions in a communications network, comprising: accessing a list of pre-defined traffic signatures, each traffic signature representing a non-malicious control plane network traffic pattern; monitoring network traffic within the control plane; comparing the monitored network traffic to the list of pre-defined traffic signatures to determine whether the monitored network traffic matches any signatures in the list of pre-defined traffic signatures; responsive to determining that the monitored network traffic does not match any signatures in the list of pre-defined traffic signatures, classifying the monitored network traffic as a potential security risk.

Preferably accessing the list of pre-defined traffic signatures comprises generating the list of pre-defined traffic signatures based on expected control plane communications.

Preferably the expected control plane communications are based on a 5G standard.

Preferably, responsive to classifying the monitored network traffic as a potential security risk, performing mitigative action against the potential security risk.

Preferably, performing mitigative action against the potential security risk comprises isolating a 5G core network function from a 5G core.

Preferably, performing mitigative action against the potential security risk comprises the step of running a backup version of the 5G core network function which is at risk.

Preferably determining whether the monitored network traffic matches any signatures in the list of pre-defined traffic signatures comprises assigning a degree of similarity between the monitored network traffic and the list of pre-defined traffic signatures such that the degree of similarity is within a pre-defined threshold in order to be considered a match.

Preferably, determining that the monitored network traffic does not match any signatures comprises using fuzzy logic techniques.

Preferably, the non-malicious control plane network traffic pattern is a communication sequence.

Preferably, monitoring network traffic within the control plane comprises monitoring communication sequences within the control plane.

The present invention accordingly provides, in a second aspect, a computer implemented method for detecting control plane intrusions in a communications network, comprising: accessing a list of pre-defined traffic signatures, each traffic signature representing a non-malicious control plane network traffic pattern; monitoring network traffic within the control plane; parsing the network traffic into smaller portions that relate to specific flows to or between specific known nodes; comparing each portion of the monitored network traffic to the list of pre-defined traffic signatures that are relevant to the nodes involved in that portion of the traffic to determine whether the monitored network traffic matches any signatures in the list of pre-defined traffic signatures; responsive to determining that the portions of the monitored network traffic do not match any signatures in the list of pre-defined traffic signatures, classifying those portions of the monitored network traffic as a potential security risk.

Preferably accessing the list of pre-defined traffic signatures comprises generating the list of pre-defined traffic signatures based on expected control plane communications.

Preferably the expected control plane communications are based on a 5G standard.

Preferably, responsive to classifying the monitored network traffic as a potential security risk, performing mitigative action against the potential security risk.

Preferably, performing mitigative action against the potential security risk comprises isolating a 5G core network function from a 5G core.

Preferably, performing mitigative action against the potential security risk comprises the step of running a backup version of the 5G core network function which is at risk.

Preferably determining whether the monitored network traffic matches any signatures in the list of pre-defined traffic signatures comprises assigning a degree of similarity between the monitored network traffic and the list of pre-defined traffic signatures such that the degree of similarity is within a pre-defined threshold in order to be considered a match.

Preferably, determining that the monitored network traffic does not match any signatures comprises using fuzzy logic techniques.

Preferably, the non-malicious control plane network traffic pattern is a communication sequence.

Preferably, monitoring network traffic within the control plane comprises monitoring communication sequences within the control plane.

The present invention accordingly provides, in a third aspect, a computer system including a processor and memory storing computer program code for performing the steps of any of the methods set out above.

The present invention accordingly provides, in a fourth aspect, a computer program element comprising computer program code to, when loaded into a computer system and executed thereon, cause the computer to perform the steps of any of the methods set out above.

### Brief Description of the Drawings

Embodiments of the present invention will now be further described by way of example only and with reference to the accompanying drawings, wherein:
Figure 1 is a block diagram which shows a 5G architecture based on a Service-Based Architecture (SBA) approach.
Figure 2 illustrates the functionality of a signalling communications proxy (SCP) in connecting all 5G network functions together.
Figure 3 illustrates knowledge-based intrusion prevention systems for 5G core.
Figure 4 illustrates an exemplary set of 5G core communication patterns.
Figure 5 illustrates a knowledge-based system in accordance with embodiments of the present invention.
Figure 6 illustrates an exemplary communication pattern and a corresponding exemplary set of rules in accordance with embodiments of the present invention.
Figure 7 is a flow diagram of a method for detecting control plane intrusions in a communications network in accordance with embodiments of the present invention.

### Description of the Embodiments

Embodiments of the present invention provide a computer-implemented method for 5G network intrusion prevention.

One of the main 5G core components is a 5G network data analytics function (NWDAF). The NWDAF is defined in 3GPP TS 29.520 and is designed to provide analysis and monitor the network traffic in the 5G system to enhance the quality of experience of the end users. The third Generation Partnership Project (3GPP) introduced many use cases in which NWDAF can improve the 5G network communication and the user experience. To achieve this improvement, the NWDAF receives traffic reports from nodes and network functions throughout the system. These nodes and functions typically subscribe to the NWDAF and are subsequently allowed to file their reports. The NWDAF analyses the reports to find parts of the network that are experiencing high loads so that further resources can be provided to those parts of the network. Similarly, the NWDAF will identify areas of the system that are underutilised so that resources can be scaled down and the system can run more efficiently. The majority of reports sent to the NWDAF are received from a user plane where there are typically thousands of base stations and other networking nodes. A minority of the overall data reported to the NWDAF will typically be received from the relatively small number of functions on the control plane.

One of the 3GPP's suggested use-cases is to consider the end user security as summarised in Table 1.

**Table 1. Use Case: Prevention of various security attacks**

| **Use-case criteria** | **Description** |
|---|---|
| **Use characteristics** | Security, not real time. |
| **Potential provider NFs or AF** | Examples include user plane function (UPF), SMF (session management function), charging systems, AF (application function). |
| **Input data** | Statistics about traffic towards a service or destination address (e.g., IP address range). |
| **Potential consumer NFs or AF** | Examples include policy control function (PCF), operations support systems (OSS), application function (AF). |
| **Output data** | Alerts, list of risky user equipment (UE) or destinations. |
| **Differentiation criteria** | Traffic patterns: correlations between the same UE and same target (e.g. voice call, data request towards same host), abnormal number of requests towards same target, abnormal number of requests from usually less active UE. |
| **Possible resulting actions by the consuming NF/AF** | Security alerts, traffic blocking, temporary user blocking. |
| **Benefits** | Avoid loss of revenue, service assurance, reputation. |

As summarised in Table 1 the suggested use case is based on statistical non-real-time security analysis approach in which the use-case is focused on securing the User Equipment (UE). Although securing the UE is very important; the use-case may not provide a real time security solution. Moreover, the use-case neglects the security of the 5G core.

None of the 3GPP use-cases address the security issues relating to 5G core. To provide a secure 5G communication, the present invention introduces a modified 5G core architecture in which a new network function monitors the communication and/or interaction amongst the 5G control plane network functions. In the case of any observed abnormality, the proposed architecture will act (or recommend an action) according to the indicated severity of the issue.

In some examples, the present invention introduces an Intrusion Prevention Unit (IPU) which will receive traffic reports that relate to the control plane from the NWDAF. The IPU monitors the interconnection communication between the 5G control plane functions and compares these to a set of expected or normal (safe) communication signatures. These "safe" signatures relate to the normal behaviour of the control plane and are stored in a knowledge base, e.g., a database. The communications between network functions are well defined in the standards and so there are a relatively small number (in the order of thousands, or more) of possible normal exchanges. By checking each interaction between a pair of network functions, the system can check for normal behaviour against these "safe" signatures. In the case of abnormality, the NWDAF will seek and apply actions as advised by a Recommendation Unit.

Embodiments of the present invention present a method which defines an exhaustive list of "safe" traffic signatures for network communications within the control plane (core) of the 5G network. An intrusion prevention unit (IPU) monitors traffic in the control plane and compares it to the "safe" traffic signatures. If the monitored traffic matches one of the "safe" signatures then it is deemed normal/safe and no further action is required. However, if the traffic does not match any of the pre-defined "safe" traffic signatures, then it will be deemed to be a potential security risk and an appropriate action may be taken. The approach taken by the present invention has the benefit of not needing knowledge of signatures outside of "safe" signatures in order to detect an "unsafe" signature. Therefore, a smaller database of signatures is required which means that the approach of the present invention has the technical benefits of reduced latency, reduced memory requirements and reduced computational processing compared to a conventional system that is actively searching for an "unsafe" signature as there are many more "unsafe" signatures than "safe" signatures.

The 5G core is the heart of the 5G mobile network which is designed to provide a reliable end to end connection between the users. The 5G core consists of many essentials functions which handles varieties of task such as mobility, authentication, authorisation, etc. The main difference of the 5G networks among the former generations are that the core network functions are based on software implementation. Additionally, most of the 5G vendors divided the network functions into small pieces of software code known as microservices.

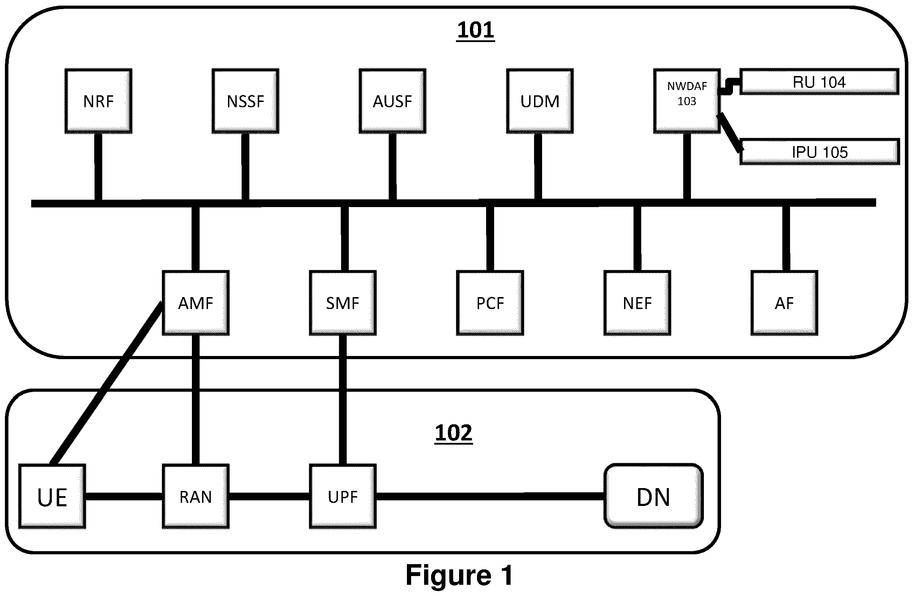

Figure 1 is a block diagram which shows a 5G architecture based on a Service-Based Architecture (SBA) approach. This approach may be designed to deploy the 5G core into the cloud. The network traffic may be monitored in the control plane 101 to detect intrusions. Elements of the SBA architecture are shown in the control plane 101 and the user plane 102. The control plane in the 5G architecture comprises several components including the network repository function (NRF), network slice selection function (NSSF), authentication server function (AUSF), unified data management (UDM), access and mobility management function (AMF), session management function (SMF), policy control function (PCF), network exposure function (NEF), (application function) AF and NWDAF 103 components. The user plane 102 comprises several different components including the user equipment (UE), radio access networks (RAN), user plane function (UPF) and data network (DN) components. In the present invention, the control plane of the 5G architecture is modified to further comprise an IPU 104 and an optional Recommendation Unit 105 so as to provide a security solution for the 5G core.

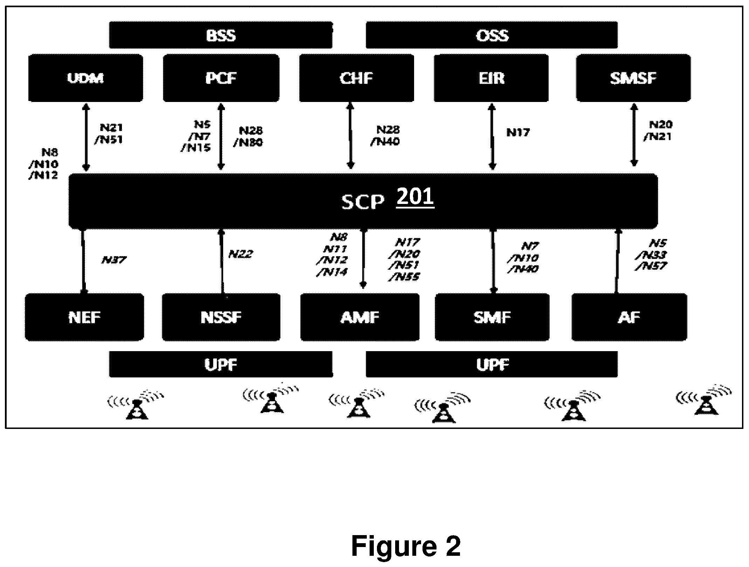

One of the main 5G core components is the Signalling Communications Proxy (SCP). The main task of the SCP is to simplifies routing and management on the control plane. Figure 2 shows one option of how the functionality of the SCP may be configured to connect all of the 5G network functions (NF) together. In the present invention, there are three components that can be used on their own or in combination with one another in order to provide a secure 5G connection. These components are a network listener (i.e. traffic monitor), an Intrusion prevention unit (IPU) and an optional Recommendation unit.

In order to verify whether or not the 5G core network traffic is malicious, the traffic must be identified. One technique for capturing traffic is port mirroring which forwards a copy of at least one incoming and/or outgoing packet from at least one port to the analysis unit. This is referred to as a network listener, and this network listener may be attached to (or part of) the SCP to oversee the communication between the 5G network functions. In some examples, the captured traffic is forwarded to the IPU 104 for analysis and/or monitoring.

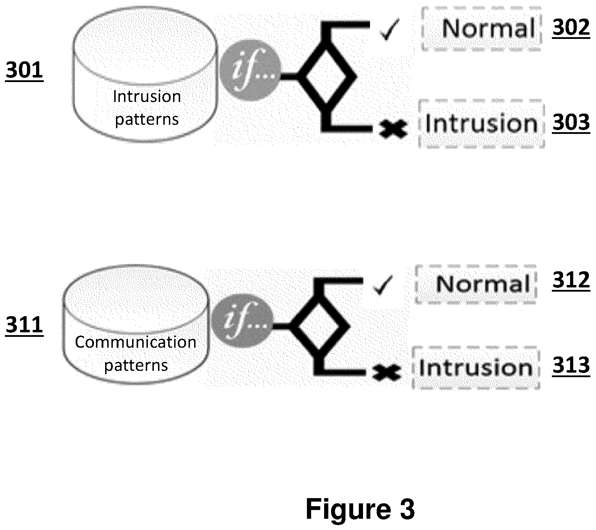

The intrusion prevention unit (IPU) 104 operates to identify any malicious activity of the 5G core communication. An IPU 104 typically uses one of the following approaches to decide if the forwarded traffic is malicious: a statistics-based approach, a machine learning based approach or a knowledge-based approach. Typically, the statistics-based and machine learning based approaches result in a high number of false alarms making it less effective in detecting intrusions than the knowledge-based approach. A knowledge-based approach typically results in minimal false alarms. A typical knowledge-based system is shown in Fig. 3 where intrusion patterns 301 are determined by a knowledge-based engine to be either normal 302 or an intrusion 303. The knowledge-based approach promptly identifies the intrusion and is superior to the statistics based and machine-learning based approaches for detecting known attacks. However, a knowledge-based system typically requires to be updated frequently with new signatures indicating malicious behaviour (e.g. intrusions). Therefore, if a knowledge-based approach considers forwarded traffic that includes a previous intrusion that has been modified (even slightly) to a new variant, then the knowledge based approach would be unlikely to identify this new intrusion variant.

The present invention provides a solution to the above mentioned problems with a signature-based approach which is a modification of the knowledge-based approach in that it includes inter nodes 5G core communication as normal patterns, and instead of searching for intrusion patterns in the captured traffic, the signature based approach searches for the 5G core communication patterns. This is shown in Fig. 3 where the 5G core communication patterns 311 of the captured traffic are determined (e.g. by a signature-based engine) as either being known 5G core communication patterns, i.e. normal 312, or as not being known 5G core communication patterns, i.e. an intrusion 313.

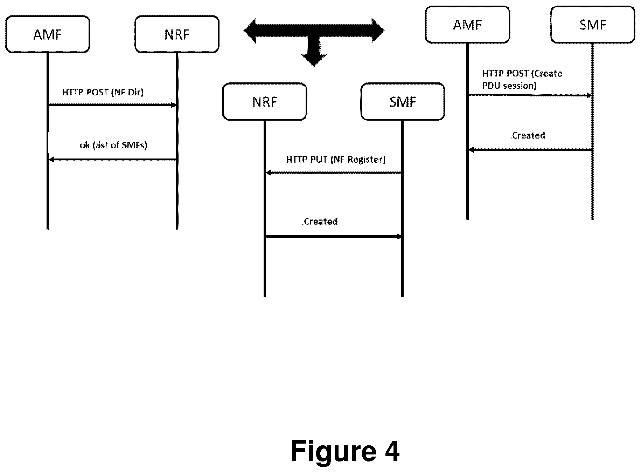

Fig. 4 shows exemplary 5G core communication patterns which can be stored in the signature knowledge base as pre-defined traffic signatures. In this example, any communication in the captured traffic outside of these pre-defined traffic signatures will be considered an anomaly, e.g. indicative of an intrusion, and it may be classified as such.

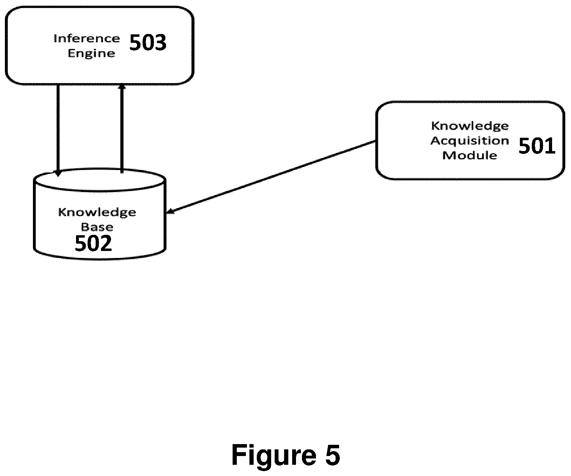

Fig. 5 shows a knowledge-based system of the IPU. The system, in some examples, comprises three primary components: (i) knowledge acquisition module 501, (ii) a knowledge base 502, and (iii) an inference engine 503.

The knowledge acquisition module 501 is responsible for entry and updating of the knowledge of the 5G core communication patterns. There are typically two approaches taken by the knowledge acquisition module. The first approach is to enforce the implementation of the 3GPP standards which describes the basic communication and interchange of the 5G core network functions. The second approach is to assign the task of enforcing the implementation of the 3GPP standards to the 5G vendors to have their own version of the 5G core communication patterns.

The knowledge base may be implemented as a 3-dimensional array with dimensions x, y and z. In this example, the x-plane of the array is indexed by an ID of the network function that is sending messages while the y-plane of the array is indexed by a destination network function ID. These IDs could be container IDs, IP addresses or an ID based on the functions, e.g., in system with multiple AMFs (a situation that arises to enable load balancing or network slicing), the AMFs are identified by IDs such as AMF-1, AMF-2, AMF-3, and so on. In the case that each function will not send messages to itself, the principal diagonal of this plane will be empty.

Continuing with the above exemplary implementation of the knowledge base 502 as a 3-dimensional array, in the z-plane of the knowledge base, an envelope of acceptable traffic characteristics is captured. Therefore, the z-plane may be indexed with:
- TCP_Max_Packet_Rate, TCP_Min_Packet_Rate,
- TCP_Max_Packet_Size, TCP_Min_Packet_Size,
- UDP_Max_Packet_Rate, UDP_Min_Packet_Rate,
- UDP_Max_Packet_Size, UDP_Min_Packet_Size,
- SCTP_Max_Packet_Rate, SCTP_Min_Packet_Rate,
- SCTP_Max_Packet_Size, SCTP_Min_Packet_Size,
and/or other appropriate metrics for transport protocols or other protocols including ICMP, DNS Lookup, etc.

In addition, or alternatively, to the communication patterns, the communication sequence may be considered as one of the characteristics of the 5G core communication. For example, network function A only communicates with network function B to respond to initial communication from network function B. Therefore, if network function A initiates a communication to network function B, this is considered an abnormality which may be indicative of an intrusion.

The inference engine is capable of enquiring as to whether or not the captured traffic is a genuine 5G core communication. The inference engine has two primary tasks: (i) sending the captured traffic to the knowledge base to find any match rule/pattern/sequence, and (ii) receiving the results from the knowledge base and determining whether or not to forward it to a recommendation unit.

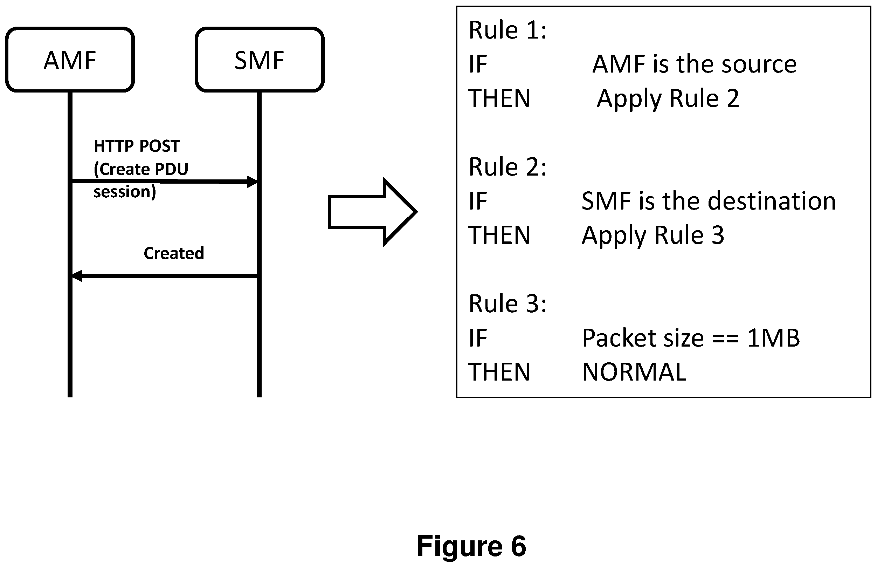

Fig. 6 shows an exemplary communication pattern between AMF and SMF network functions being encoded in the knowledge base as "If... Then..." rules which are enforced by the inference engine 503. In the example shown in Fig. 6, Rule 1 may be that "if" the AMF is the source, "then" apply Rule 2. Rule 2 may be that "if" the SMF is the destination, "then" apply Rule 3. Rule 3 may be that "if" the packet size is equal to 1 MB, "then" the communication is normal.

The security level of the 5G core may be tuned/adjusted according to the 5G vendor security requirements. In some examples, such as for strong security, 100% of network traffic within the control plane are required to match the "safe" signatures. Otherwise, the following are exemplary solutions if a 5G vendor considers less restrictive security rules:
i) Setting a threshold in which some of the communication patterns/features/sequences are enough to consider the communication as a genuine 5G core communication,
ii) Assigning a weight to at least one of the communication patterns/features/sequences in the knowledge base and using the same threshold mechanism in (i) above to determine if the communication is genuine 5G core communication, and/or
iii) Considering artificial intelligence techniques such as fuzzy logic to determine if there is any abnormality of the captured traffic.

If it is determined as such by the inference engine, the results may be delivered to a recommendation unit. The primary task of the recommendation unit is to recommend actions to the governing 5G core unit such as the Policy Control Function (PCF). The recommendation unit receives the identified risk from the IPU unit. Accordingly, it will decide at least one appropriate response to each identified risk. Hierarchical actions may be set according to the severity of identified risk. The appropriate response may vary: e.g., if there is unexpected traffic between one of a 5G core network function and an outside 5G core cluster, the recommendation unit may recommend the action of isolating the 5G core network function from the 5G core and/or running a backup version of it.

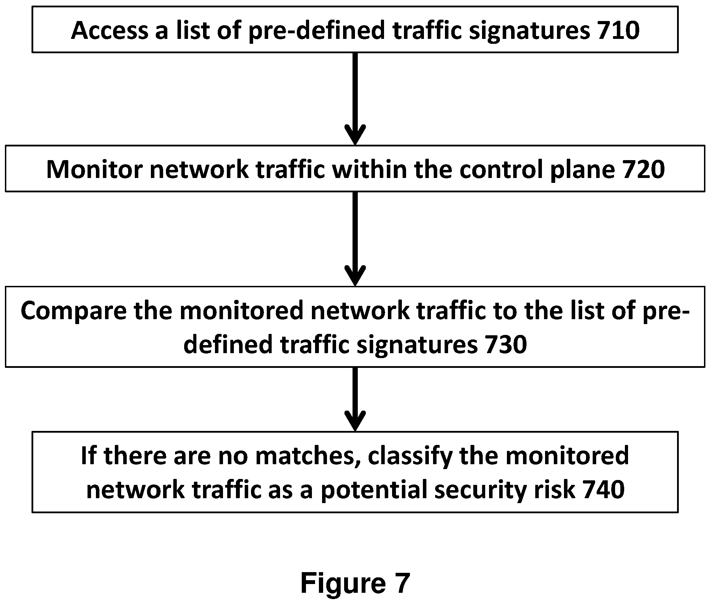

Fig. 7 represents an exemplary method for implementing the 5G network intrusion prevention.

The method starts 710 by providing a list of pre-defined traffic signatures, wherein each traffic signature represents a non-malicious control plane network traffic pattern (i.e. a "safe" signature). In some examples, providing the list of pre-defined traffic signatures comprises generating the list of pre-defined traffic signatures based on expected control plane communications (e.g., based on a 5G standard). In some examples, the list of pre-defined traffic signatures is received (rather than provided/generated) from, for example, a 5G vendor.

The method then proceeds to monitoring 720 network traffic within the control plane.

The method then proceeds to comparing 730 the monitored network traffic to the list of pre-defined traffic signatures to determine whether the monitored network traffic matches any signatures in the list of pre-defined traffic signatures. To determine whether the monitored network traffic matches any signatures in the list of pre-defined traffic signatures may comprise the step of assigning (e.g. scoring) a degree of similarity between the monitored network traffic and the list of pre-defined traffic signatures such that the degree of similarity must be within a pre-defined threshold to be considered a match, i.e., a "safe" signature.

The method then proceeds to classifying 740 the monitored network traffic as either a potential security risk (responsive to determining that the monitored network traffic does not match any signatures in the list of pre-defined traffic signatures) or as normal traffic (responsive to determining that the monitored network traffic does match at least one signature in the list of pre-defined traffic signatures). In some examples, the method proceeds to, in response to classifying the monitored network traffic as a potential security risk, performing mitigative action against the potential security risk. In some examples, performing mitigative action against the potential security risk comprises isolating a 5G core network function (which is at risk) from a 5G core. In some examples, performing the mitigative action further comprises running a backup version of the 5G core network function which was identified as being at risk. For example, if a malicious attack is detected that originates from an AMF instance, then that instance can be isolated from the network or disabled and its load can be transferred to another AMF that is already running or, if required, start up another AMF and divert the load to the new instance. Another optional mitigative action is to perform security scans or checks on the involved nodes (or virtual machines) to look for any indication or evidence of compromise.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above-described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer-implemented method for detecting control plane intrusions in a communications network, comprising:
accessing a list of pre-defined traffic signatures, each traffic signature representing a non-malicious control plane network traffic pattern;
monitoring network traffic within the control plane;
comparing the monitored network traffic to the list of pre-defined traffic signatures to determine whether the monitored network traffic matches any signatures in the list of pre-defined traffic signatures;
responsive to determining that the monitored network traffic does not match any signatures in the list of pre-defined traffic signatures, classifying the monitored network traffic as a potential security risk.

2. The computer-implemented method of claim 1, wherein accessing the list of pre-defined traffic signatures comprises generating the list of pre-defined traffic signatures based on expected control plane communications.

3. The computer-implemented method of claim 2, wherein the expected control plane communications are based on a 5G standard.

4. The computer-implemented method of any preceding claim, further comprising, responsive to classifying the monitored network traffic as a potential security risk, performing mitigative action against the potential security risk.

5. The computer-implemented method of claim 4, wherein performing mitigative action against the potential security risk comprises isolating a 5G core network function from a 5G core.

6. The computer-implemented method of claims 4 or 5, further comprises the step of running a backup version of the 5G core network function which is at risk.

7. The computer-implemented method of any preceding claim, wherein determining whether the monitored network traffic matches any signatures in the list of pre-defined traffic signatures comprises assigning a degree of similarity between the monitored network traffic and the list of pre-defined traffic signatures such that the degree of similarity is within a pre-defined threshold in order to be considered a match.

8. The computer-implemented method of any preceding claim, wherein determining that the monitored network traffic does not match any signatures comprises using fuzzy logic techniques.

9. The computer-implemented method of any preceding claim, wherein the non-malicious control plane network traffic pattern is a communication sequence.

10. The computer-implemented method of claim 9, wherein monitoring network traffic within the control plane comprises monitoring communication sequences within the control plane.

11. A system comprising:
a processor; and
a memory including computer program code;
the memory and the computer code configured to, with the processor, cause the system to perform the method of any of the preceding claims.
